# EUROPEAN PATENT SPECIFICATION

(11) **EP 3 673 024 B1**
(45) Date of publication and mention of the grant of the patent: **28.08.2024**
(21) Application number: 18867900.5
(22) Date of filing: 15.10.2018
(51) Int. Cl.: C09J 7/38, C09J 7/24, C09J 4/06, C08F 220/18, C08F 220/10

(54) **FOOD CONTACT RESEALING LABEL MATERIAL, FOOD CONTACT RESEALING LABEL, PREPARATION METHOD OF MATERIALS AND APPLICATION MATERIALS**
MATERIAL FÜR ETIKETT ZUR WIEDERVERSIEGELUNG VON NAHRUNGSMITTELN, ETIKETT ZUR WIEDERVERSIEGELUNG VON NAHRUNGSMITTELN, HERSTELLUNGSVERFAHREN VON MATERIALIEN UND APPLIKATIONSMATERIALIEN
MATÉRIAU D'ÉTIQUETTE DE RESCELLEMENT POUR CONTACT ALIMENTAIRE, ÉTIQUETTE DE RESCELLEMENT POUR CONTACT ALIMENTAIRE, PROCÉDÉ DE PRÉPARATION DE MATÉRIAUX ET APPLICATION DE MATÉRIAUX

(30) Priority: 17.10.2017 CN 201710965316
(43) Date of publication of application: 01.07.2020
(73) Proprietor: Jinwanzheng (Guangdong) New Material Co., Ltd, Zhaoqing City, Guangdong (CN)
(72) Inventor: LI, Shufeng, Guangzhou, Guangdong 510080 (CN); LI, Shumang, Guangzhou, Guangdong 510080 (CN); ZHOU, Qiumei, Guangzhou, Guangdong 510080 (CN)
(74) Representative: Bayramoglu et al.
(86) International application number: PCT/CN2018/110228
(87) International publication number: WO 2019/076261

(56) References cited:
- EP-A1- 1 528 091
- EP-A1- 3 330 082
- WO-A1-2007/126620
- WO-A1-2010/116814
- CN-A- 106 327 994
- CN-A- 106 327 994
- CN-A- 106 332 822
- CN-A- 107 699 154
- ANONYMOUS: "GB/T 14216-2008_English: PDF (GB/T14216-2008)", 18 December 2021 (2021-12-18), pages 1 - 2, XP055874874, Retrieved from the Internet <URL:https://www.chinesestandard.net/PDF/English.aspx/GBT14216-2008> [retrieved on 20211220]

## Description

### TECHNMICAL FIELD

The invention relates to label materials and labeling technologies field, and more particularly, to a food contact resealing label material, the food contact resealing label and preparation method and application thereof.

### BACKGROUNMD OF THE INVENTION

As an information carrier, the pressure-sensitive adhesive label can be seen everywhere in daily life. The basic functions of the label are to carry the information of the goods and the manufacturers, embellish and beautify the goods. With the development of the materials science, higher functionality of labels are required because of the increasingly various goods and the packaging forms. As a result, the development and application of functional labels are diversified, and many functional labels have been developed, such as high temperature resistant labels, cold-tolerant labels, printable labels, organic solvent-resistant wipe labels, flow shop process labels, air-guided mesh labels and so on.

According to the data of the Food and Agriculture Organization of the United Nations (FAO), as many as 1.3 billion tons of food are wasted every year around the world. Part of the reason for this is the food spoilage caused when the fresh foods during the transportation, storage and display on shelves or are not consumed in time after being opened by the consumers. In addition, even if the foods are still edible, a large number of foods are thrown away as garbage because the expiration date of foods is shortened due to the lack of packaging. Moreover, due to the lack of barrier property in food packaging, oxygen and moisture can cause the loss of food odor and nutrition and even deterioration. To solve these problems, the United Nations Food and Agriculture Organization and the United Nations Environment Programme (UNEP) cooperated with global leading companies, organizations and research institutions and launched the SAVEFOOD (Food Conservation) Initiative six years ago. The common goal is to find solutions to avoid food loss and waste throughout the value-creation chain. To this end, it is necessary to create the right infrastructure, review and adjust the food packaging methods, standards and specifications, and conduct research on the food packaging itself.

The pressure sensitive label under the existing technology is the pressure sensitive adhesive composed of several acrylates which are polymerized in water or organic solvents. Water-based pressure-sensitive adhesives are called hydrotactic pressure-sensitive adhesives because they are soluble in water, alcohols and oils (such as olive oil) and can be used in food contact to transfer a large number of acrylates to foods. The pressure sensitive adhesive with organic solvent as the medium is called the solvent-based pressure sensitive adhesives, wherein the solvent includes the acetone, isopropanol, ethyl acetate, methyl ethyl ketone, toluene and xylene. However, since the hazardous substances are found in the products and prohibited by regulations, the solvent-based pressure sensitive adhesives cannot be used in food contact packaging. According to the requirements for the food contact material and product additive by US Food and Drug Administration Regulations (FDA21, 175.105 standard) and GB/9685-2016 National Food Safety Standard, the invention and development of materials for the food contact resealing pressure sensitive adhesive label have become the urgent affair in the field of packing materials.

### SUMMARY OF THE INVENTION

To overcome the defects of the existing technologies, the invention aims to provide a food contact resealing label material, wherein the oxygen permeability, moisture-penetrability, the residual of solvent, the overall migration volume of the acrylic acid and the isocyanate residue of the material can meet the requirements for food contact and food contact package.

In a second aspect, the invention is to provide a preparation method of food contact resealing label material, by which a food contact resealing label material having a safety performance and meeting the use requirements is obtained.

In order to achieve the above goals, the technical solution adopted by the invention is as in the appended claims.

### DESCRIPTIONS OF DRAWINGS

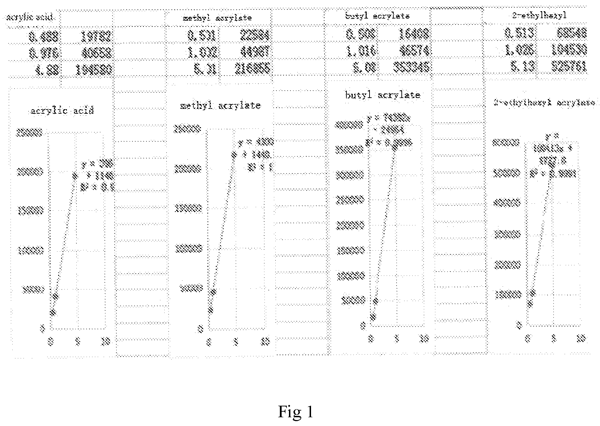

Fig.1 is the standard curve of the acrylic monomer in the detection of the migration volume of the acrylic monomers.

### DETAILED DESCRIPTION OF THE EMBODIMENTS

The invention will be further described in detail in combination with the specific embodiments.

The RL value mentioned in the invention refers to the result report of low contents or not detected in the detection process, particularly characterized by the determination of not detected and low contents. In the invention, the residual of solvent, the overall migration of acrylic acid, and the isocyanate residual amount are all tested according to the requirements of GB9685-2016 and related methods.

The food contact resealing label material of this invention comprising:
A thin film substrate, wherein the oxygen permeability is lower than 2.0×10⁻⁵m³/m²·d·Pa and the moisture-penetrability is lower than 2.0×10⁻⁴kg(s·m²);
A acrylic-acid pressure-sensitive adhesive which is designed on the lower surface of the thin film substrate;
A silicone oil body paper /film which is designed on the lower surface of the acrylic-acid pressure-sensitive adhesive.

The acrylic-acid pressure-sensitive adhesive of this invention is the food contact resealing solvent based acrylic two-liquid crosslinking pressure sensitive adhesive comprising an acrylic polymer as a first liquid and an isocyanate crosslinking agent as a second liquid, which is in parts by weight:
The amount of the acrylic monomer is from 20 to 60 parts by weight; the acrylic monomer is the polymer formed by three or more than three materials of acrylic acid, methyl acrylate, butyl acrylate, 2-ethylhexyl acrylate, acrylic acid n-propyl ester and ethyl acrylate;
The amount of the isocyanate cross-linking agent is from 1 to 0.5 parts by weight;
The amount of the initiator is from 0.2 to 0.5 parts by weight;
The amount of the solvents at least 40 parts by weight.

The thin film substrate of this invention is a film selected from a base film formed by vapor-depositing aluminum or coated with PVDC on a film consisting of polyester. And in the research of the invention, it is found that after PVDC is coated on the film substrate, taking the biaxially oriented polypropylene as an example, the oxygen permeability and the water permeability are reduced by 1000 times and 3 times respectively. Generally, a single 2µm layer coating can obtain good barrier property and moisture resistance because the good barrier property can delay the oxidation of the packaged contents, prevent the loss of the fragrance, water and alcohol of the packaged contents and stop the invasion of external odors. The moisture resistance of PVDC can prevent the packaged contents, especially the content with high moisture, alcohol and liquid odor from drying out, and stop the natural loss (weight loss) of the quantitative products. In addition, the moisture resistance of PVDC can prevent the intrusion of external moisture for the dry packaged contents such as biscuits, dried meat, and so on. The gas barrier property of PVDC in the invention does not change with the environmental humidity, so no deterioration or variation will be found in the packaged contents even in a high temperature and high humidity environment.

In other embodiments of the invention, the barrier property of the related film substrate is enhanced through the aluminum metallization. Vacuum aluminizing film can be used as the barrier packaging material, and its preparation method is that aluminum is first vaporized at high temperature in a high-vacuum equipment, and then the vaporized aluminum is quenched, deposited and coated on the surface of the plastic film to form an aluminum-plated layer on the plastic film to obtain the desired film. As for the barrier aluminizing film, it is a kind of film substrate which utilizes the barrier property of the aluminized layer to oxygen, water vapor, and low molecular spice ingredients to achieve the performance of the oxygen permeability lower than 2.0×10⁻⁵ cm³ / m²·d · Pa and the moisture permeability lower than 2.0 × 10⁻⁴ kg (s· m²).

The related isocyanate cross-linking agent is the polymer formed by one or a mixture of more than two of toluene -2, 6-diisocyanate, diphenyl methylalkane-4, 4-diisocyanate, toluene -2, 4- diisocyanate, naphthalene-1, 5- diisocyanate, phenyl isocyanate, cyclohexyl isocyanate and hexamethylene isocyanate. In the invention, the acrylic monomer is used as the main component of acrylic-acid pressure-sensitive adhesive, while the isocyanate is used as a crosslinking agent. The function of isocyanate is to crosslink with the main adhesive so that the solidified matter can reach an ideal condition. The cross-linking agent, also known as curing agent, hardener, maturing agent or modifier, is a kind of substance or mixture which enhances or controls the curing reaction. Cross-linking is a process in which the thermosetting resin has gone through irreversible changes through a series of chemical reactions such as condensation, ring-closure reaction, addition reaction and catalytic reaction. The curing reaction is accomplished by adding curing (crosslinking) agent. The cross-linking agent is an indispensable additive, which has a great influence on the mechanical property, heat resistance, water resistance and corrosion resistance of the adhesive layer. In the existing technology, residues of isocyanate cross-linking agent added to the acrylic adhesive often exceed the standard in the product, which has obvious irritation and sensitization. If it repeatedly contacts with the human body, it can cause allergic asthma and affect the respiratory function. Therefore, isocyanate is a strictly limited substance in the EU and China food safety regulations. As the isocyanate crosslinking agent used in the invention, the residue of isocyanate ranges from 0.01 mg/kg to ND value by the preparation method of the food contact resealing label material. In most embodiments of the invention, the residual of isocyanate is ND in the food contact resealing label material. The residual isocyanate of the invention meets the standards and requirements of GB/9685-2016 national food safety standard in which the isocyanate residues in food contact materials and products are required no more than 0.1 mg/kg.

The **keying** of the lower surface of the film substrate in this invention is greater than 44 mN/m, wherein the keying refers specifically to the cohesive force between the adhesive and the substrate or the adhesive and the primer coating or the primer coating and the film substrate. The keying according to this invention indicates the bond strength between the food contact resealing solvent based acrylic two-liquid crosslinked pressure sensitive adhesive comprising an acrylic polymer as a first liquid and an isocyanate crosslinking agent as a second liquid and film substrate or the adhesive and the primer coating or the primer coating and the film substrate. The surface free energy of the substrate or the primer coated on the lower surface of the substrate and the cohesion strength of the related pressure sensitive adhesive are important conditions to determine the keying. In the existing technology, the keying of the formed pressure-sensitive adhesive label cannot be characterized by testing. In the study of this invention, the keying of the pressure sensitive adhesive products can be characterized by the surface tension (mN/m) of the substrate (and/or primer coating). The related keying is greater than 44 mN/m, which aims to realize no residual adhesive remains on the object to be attached after 1 to 160 times tests of removing and pasting. In the research and tests of this invention, the food contact resealing label is first pasted to the test panel with more than 44 mN/m surface tension, which is 46 mN/m, 48 mN/m or 50 mN/m. Then, the aging test is conducted on the label for 48h-96h in which the temperature and relative humidity are set as 66°C and 80% respectively. After that, the label is removed from the panel at a rate of 5-50/s and an angle of about 120° to test and confirm that the adhesive of the food contact resealing label does not remain on the object to be attached. In addition, the high temperature and high humidity and 48-96h tests were used to predict whether there will be residual adhesive left on the packing bag and container during a period of one year and two years (refer to the Chinese Patent Application No. 201610692962.7, Test Method for Residue Grade of Pressure-Sensitive Adhesive Products, which is cited by this invention). It can be seen that the keying greater than 44 mN/m in this invention is beneficial to the food contact resealing label which is pasted to the packaging bag, container or the food after 1 to 160 times tests of removing and pasting. And the overall migration volume of the acrylic acid can meet the requirements of the national food safety GB9685-2016 standard.

In a specific embodiment, the solvents of this invention are acetone, isopropanol, ethyl acetate and butanone.

The acrylic pressure sensitive adhesive of this invention also includes the solvent scavenger. Specifically, the related solvent scavenger is one or a mixture of more than two of epoxypropane, epoxybutane, diphenol, tetraphenol epoxy resin and diethylene vinyl cyclohexene epoxy resin. The initiator is one or two mixture of azobisisobutyronitrile, azobisisoheptanenitrile. During the coating curing process, the solvent scavenger captures the residual solvent, which has greatly reduced the amount of solvent remaining in the food contact resealing label material.

As a further solution, in the acrylic pressure sensitive adhesive of the present invention, the residual of solvent is from 5mg/m² to RL value, the overall migration volume of the acrylic acid is from 6mg/kg to RL value and the residue of isocyanate is from 0.01 mg/kg to ND value.

A preparation method of the food contact resealing label material comprises:
Step of preparing of the acrylic-acid pressure-sensitive adhesive;
Step of infrared radiation penetration: First, transfer the above mentioned silicone oil body paper/film coated with adhesive to the infrared radiation area and then the far infrared is adopted to conduct the radiation penetration on the acrylic-acid and isocyanate cross-linking pressure-sensitive adhesive, which is then transferred to the drying tunnel. Wherein the drying tunnel is provided with a temperature increasing step-by step area and the hot air drying is conducted in baking zone.

Step of laminating the adhesive with the film substrate. After the far infrared radiation, the dried and solidified acrylic-acid and isocyanate cross-linking pressure-sensitive adhesive is then transferred to the film substrate wherein the oxygen permeability is lower than 2.0×10⁻⁵m³/m²·d·Pa and the moisture-penetrability is lower than 2.0×10⁻⁴kg(s·m²).

A preparation method of the food contact resealing label material, characterized by comprising:
Step of preparing of the acrylic-acid pressure-sensitive adhesive;
Step of coating adhesives: coat the acrylic-acid and isocyanate cross-linking pressure-sensitive adhesive on the surface of the prepared silicone oil body paper/film. Step of infrared radiation penetration: First, transfer the above mentioned silicone oil body paper/film coated with adhesive to the infrared radiation area and then the far infrared is adopted to conduct the radiation penetration on the acrylic-acid and isocyanate cross-linking pressure-sensitive adhesive, which is then transferred to the drying tunnel. Wherein the drying tunnel is provided with a temperature increasing step-by step area and the hot air drying is conducted in baking zone.
Step of surface material treatment: the film substrate is processed by the electric corona so that the viscous force is greater than 44mN/m;
Step of laminating the adhesive with the film substrate. After the far infrared radiation, the dried and solidified acrylic-acid and isocyanate cross-linking pressure-sensitive adhesive is then transferred to the film substrate wherein the oxygen permeability is lower than 2.0×10⁻⁵m³/m²·d·Pa and the moisture-penetrability is lower than 2.0×10⁻⁴kg(s·m²).

As a further solution, in the preparation steps of acrylic pressure sensitive adhesive of this invention, the raw materials of the acrylic-acid pressure-sensitive adhesive are in parts by weight in which the amount of the acrylic monomer is from 20 to 60 parts by weight, the amount of the initiator is from 0.2 to 0.5 parts by weight, the amount of the solvents is at least 40 parts by weight and the amount of the isocyanate cross-linking agent is from 1 to 0.5 parts by weight. The specific steps comprise: first, the acrylic monomers and half of the solvents in the proportion are uniformly mixed and then added to the reactor. After that, the initiator is dissolved in the remaining solvents, and then the dissolved initiator is added to the reactor for reaction and the first liquid acrylic-acid pressure-sensitive adhesive is obtained. Later, the acrylic pressure sensitive adhesive as the first liquid and the isocyanate crosslinking agent as the second liquid are blended and stirred at high speed and the food contact resealing solvent based acrylic two-liquid crosslinked pressure sensitive adhesive is obtained.

In the step of infrared radiation drying according to the preparation method of this invention, the effective wavelength in the far infrared radiation is from 6 to 200µm.

As a further solution, in the preparation method according to this invention, the film substrate is processed by the electric corona before the step of laminating the adhesive with the film substrate, so that the keying is greater than 44mN/m. Then, the layer of the acrylic-acid pressure-sensitive adhesive on the silicone oil body paper/film is anchored to the lower surface of the thin film substrate after the film substrate is thermally cured at 50°C to 60°C for 96 h to 120 h. The acrylic-acid pressure-sensitive adhesive anchored to the lower surface of the thin film substrate after the corona treatment can make acrylic acid monomer be further condensed with isocyanate crosslinking agent., so that the residual of isocyanate cross-linking agent can reach ND value.

The infrared ray is an electromagnetic wave with a wavelength of 0.72~1000 µm. Usually, the wavelengths above 5.6 µm are called far infrared ray, while the wavelengths below 5.6 µm are called near infrared ray. Infrared drying is a method of drying by radiation heat transfer. The electromagnetic wave generated by the infrared radiator reaches the material to be dried in the rectilinear propagation at the speed of light. When the emission frequency of the infrared radiation and the inherent frequency of the molecular movement in the material to be dried (That is, the emission wavelength of infrared rays and the absorption wavelength of the material to be dried) are matched, the internal intense friction generates the heat and realizes the radiation penetration. In the far-infrared drying of this invention, the surface temperature of the adhesive layer is decreased due to the continuous evaporation and heat absorption of the surface solvent medium in the dried adhesive layer. As a result, the internal temperature of the adhesive layer is higher than the surface temperature and the heat diffusion starts from the inside to the outside. At the same time, moisture migration occurs due to the moisture gradient inside the adhesive layer, and the moisture is always diffused from the inside with a large amount of moisture content to the outside with little moisture content. Therefore, the direction of moisture diffusion in the adhesive layer is consistent with that of heat diffusion, which thereby accelerates the diffusion process in the solvent medium. That means it accelerates the progress of radiation, penetration, and drying. This invention adopts the far-infrared radiation penetration to realize the full penetration of the acrylic pressure-sensitive adhesive layer from inside to outside. The wide absorption bands of the wet materials and solvent medium in the far infrared area have a strong absorption effect on the far infrared ray in the area, which accelerates the process of radiation, penetration and drying. Since the depth (diathermal depth) of the radiation penetrating adhesive layer is approximately equal to the wavelength, and the wavelength of far infrared ray is longer than that of near infrared ray, so the far infrared ray can dry the material more thoroughly than the near infrared ray, and the effects are much better. In particular, since the emission frequency of far infrared rays matches the molecular natural frequencies of materials such as plastics, macromolecules and solvents, so the molecules of these substances are strongly resonated. Thus, the far infrared rays can penetrate into the inside of these heat-dried adhesive layers and can be easily absorbed. Therefore, the far infrared ray drying is much better. Therefore, in a preferred embodiment, the effective wavelength of the related far-infrared radiation is from 6µm to 200 µm. And the effective wavelength of far-infrared radiation in one embodiment is 60-150 µm, which is 80-120µm in another embodiment and the irradiation time is 30-15 seconds.

In the step of infrared radiation drying according to the preparation method of this invention, the baking area comprises 15 temperature control zones and each temperature control zone has a length of 2 meters. The drying temperature increases from 80°C in the first zone to 160 °C in the 11th zone step by step and then decreases step by step. The silicone oil body paper/film with acrylic two-liquid crosslinked pressure sensitive adhesive coating goes through the drying area at 30-80 m/min. Air outlets are set up in the fifteen related temperature control zones in which the air speed increases from 5m/s to 30m/s step by step. In a preferred embodiment, the baking temperature is gradually increased from 90°C in the first temperature control zone to 150°C in the eleventh temperature control zone, and then the temperature is gradually decreased. In the infrared ray drying process, the stepwise temperature rise in the baking zones and the hot air drying with variational wind speed are taken into consideration. The heat rays penetrate the pressure sensitive adhesive to reach the surface of the silicone oil base paper or film, so that the surface of the silicone oil base paper or film is heated. The heat first penetrates the bottom layer of the acrylic pressure-sensitive adhesive, and then absorbs the solvent medium to the surface of the acrylic pressure-sensitive adhesive layer by hot air transfer. Therefore, the processes of radiation, penetrating and drying are from the inside to the outside. The solvent vapor escapes naturally, and the floating solvent and acrylate of the inner layer can be completely evaporated, which solves the problems that the surface is heated first, the film is formed in the drying process and the solvent vapor is difficult to escape found in the ordinary heat drying process. In most embodiments of the invention, the related residual solvent in the material for the food contact resealing label is ND by the related preparation method. Therefore, the residual of solvent can meet the requirements by GB/10004-2008 national standard in which the solvent residue ≤ 5mg/m²

Further, the number of air outlets is 15, and each temperature control area corresponds to one air outlet, and the wind speed of each air outlet is set as follows::
The wind speed at the first air outlet is 5m/s;
The wind speed at the second air outlet is 5m/s;
The wind speed at the second air outlet is 10m/s;
The wind speed at the fourth air outlet is 10m/s;
The wind speed at the fifth air outlet is 10m/s;
The wind speed at the sixth air outlet is 15m/s;
The wind speed at the eighth air outlet is 15m/s;
The wind speed at the ninth air outlet is 20m/s;
The wind speed at the tenth air outlet is 20m/s;
The wind speed at the eleventh air outlet is 25m/s;
The wind speed at the twelfth air outlet is 20m/s;
The wind speed at the thirteenth air outlet is 15m/s;
The wind speed at the fourteenth air outlet is 10m/s;
The wind speed at the fifteenth air outlet is 5m/s;
As a further solution, in the step of preparing the acrylic pressure-sensitive adhesive according to the preparation method of this invention, the reaction temperature in the reactor ranges from 75 to 82°C and the reaction time requires 6 to 10 hours. When the reaction is finished, the temperature drops to 40 to 45 °C and the reactor is kept at the temperature for 1 to 2 hours.

A food contact resealing label wherein the label is formed by the food contact resealing label material of this invention with die cuts and/or with printing product information patterns.

An application of the food contact resealing label material to the food packaging, wherein the food contact resealing label material has no toxicity. Therefore, the label can be pasted to the food or the container directly.

The following are embodiments of the invention, and the raw materials and reagents in the following embodiments can be obtained by purchase.

### Embodiment 1 (comparative example)

A food contact resealing label material comprising:
A thin film substrate, wherein the oxygen permeability is 1.15×10⁻⁵ cm³/ m²·d · Pa and the moisture-penetrability is 1.44×10⁻⁴ kg (s· m²). The related thin film substrate is the polyethylene film by the aluminum metallization.

An acrylic-acid pressure-sensitive adhesive which is designed on the lower surface of the related thin film substrate is the food contact resealing solvent based acrylic two-liquid crosslinked pressure sensitive adhesive comprising an acrylic polymer as a first liquid and an isocyanate crosslinking agent as a second liquid, which is in parts by weight:
The amount of the acrylic acid is 10 parts by weight;
The amount of the butyl acrylate is 15 parts by weight;
The amount of the methyl acrylate is 5 parts by weight;
The amount of the cyclohexyl isocyanate is 1 part by weight;
The amount of the azodiisobutyronitrile is 0.5 parts by weight;
The amount of the acetone is 70 parts by weight;
A silicone oil body paper/film which is designed on the lower surface of the acrylic-acid pressure-sensitive adhesive;
The preparation method of the food contact resealing label material is as follows:
   Step of preparing of the acrylic-acid pressure-sensitive adhesive: first, the acrylic acid, butyl acrylate, methyl acrylate and half of the solvents in the proportion are uniformly mixed and then added to the reactor. After that, the azodiisobutyronitrile as the initiator is dissolved in the remaining solvents and the dissolved initiator is then added to the reactor for reaction. The reaction temperature in the reactor ranges from 75 to 82°C and the reaction time is 8 hours. When the reaction is finished, the temperature drops to 40 °C, the reactor is kept at the temperature for 2 hours and the acrylic-acid pressure-sensitive adhesive as the first liquid is obtained. Later, the acrylic pressure sensitive adhesive as the first liquid and the isocyanate crosslinking agent as the second liquid are blended and stirred at high speed and the food contact resealing solvent based acrylic two-liquid crosslinked pressure sensitive adhesive is finally obtained.

Step of coating adhesives: coat the acrylic-acid and isocyanate cross-linking pressure-sensitive adhesive on the surface of the prepared silicone oil body paper/film.

Step of the infrared radiation drying: the silicone oil body paper/film with adhesive coating is transferred to the far infrared radiation area and the far infrared rays with 60-150µm effective wavelength are adopted to conduct the radiation penetration on the acrylic-acid pressure sensitive adhesive, which is then transferred to the drying tunnel. In the related drying tunnel, the baking area with different temperature s is set up, which comprises 15 temperature control zones. Each temperature control zone has a length of 2 meters. The drying temperature increases from 90°C in the first zone to 150 °C in the 11th zone step by step and then decreases to 60 °C in the 15th zone step by step. There are 15 air outlets, and one air outlet is set for each temperature control zone. The wind speed of each air outlet is set as follows: the wind speed at the first air outlet is 5m/s; the wind speed at the second air outlet is 5m/s; the wind speed at the third air outlet is 10m/s; the wind speed at the fourth air outlet is 10m/s; the wind speed at the fifth air outlet is 10m/s; the wind speed at the sixth air outlet is 15m/s; the wind speed at the eighth air outlet is 15m/s; the wind speed at the ninth air outlet is 20m/s; the wind speed at the tenth air outlet is 20m/s; the wind speed at the eleventh air outlet is 25m/s; the wind speed at the twelfth air outlet is 20m/s; the wind speed at the thirteenth air outlet is 10m/s; the wind speed at the fourteenth air outlet is 5m/s; the wind speed at the fifteenth air outlet is 5m/s. The silicone oil body paper/film with acrylic-acid pressure sensitive adhesive coating goes through the baking area at the rate of 40 m/min.

Step of laminating the adhesive with the film substrate: after the far infrared radiation, the dried and solidified acrylic-acid pressure sensitive adhesive is transferred to the thin film substrate and then thermally cured at 60°C for 120 hours.

### Embodiment 2 (comparative example)

A food contact resealing label material comprising:
A thin film substrate, wherein the oxygen permeability is 1.10×10⁻⁵ cm³/ m²·d · Pa and the moisture-penetrability is 1.46×10⁻⁴ kg (s· m²). The related thin film substrate is the polyester film coated by PVDC.

An acrylic-acid pressure-sensitive adhesive which is designed on the lower surface of the related thin film substrate is the food contact resealing solvent based acrylic two-liquid crosslinked pressure sensitive adhesive comprising an acrylic polymer as a first liquid and an isocyanate crosslinking agent as a second liquid, which is in parts by weight:
The amount of the acrylic acid is 3 parts by weight;
The amount of the 2-ethylhexyl acrylate is 17 parts by weight;
The amount of the acrylic acid n-propyl ester is 5 parts by weight;
The amount of the methyl acrylate is 10 part by weight;
The amount of the epoxybutane is 1 part by weight;
The amount of diphenyl methane -4, 4 - diisocyanate is 0.5 parts by weight;
The amount of the azobisvaleronitrile is 0.4 parts by weight;
The amount of the isopropanol is 65 parts by weight;
A silicone oil body paper/film which is designed on the lower surface of the acrylic-acid pressure-sensitive adhesive;
The preparation method of the food contact resealing label material is as follows:
   Step of preparing of the acrylic-acid pressure-sensitive adhesive: first, the acrylic acid, 2-ethylhexyl acrylate, acrylic acid n-propyl ester, methyl acrylate, epoxybutane solvent scavenger and half of the solvents in the proportion are uniformly mixed and then added to the reactor. After that, the azobisvaleronitrile as the initiator is dissolved in the remaining solvents and the dissolved initiator is then added to the reactor for reaction. The reaction temperature in the reactor ranges from 80 to 82°C and the reaction time is 6 hours. When the reaction is finished, the temperature drops to 40 °C, the reactor is kept at the temperature for 1 hour and the acrylic-acid pressure-sensitive adhesive as the first liquid is obtained. Later, the acrylic pressure sensitive adhesive as the first liquid and the isocyanate crosslinking agent (0.5 parts by weight) as the second liquid are blended and stirred at high speed and the food contact resealing solvent based acrylic two-liquid crosslinked pressure sensitive adhesive is finally obtained.

Step of coating adhesives: coat the acrylic-acid and isocyanate cross-linking pressure-sensitive adhesive on the surface of the prepared silicone oil body paper/film.

Step of the infrared radiation drying: the silicone oil body paper/film with adhesive coating is transferred to the far infrared radiation area and the far infrared rays with 80-120µm effective wavelength are adopted to conduct the radiation penetration on the acrylic-acid pressure sensitive adhesive, which is then transferred to the drying tunnel. In the related drying tunnel, the baking area with different temperature s is set up, which comprises 15 temperature control zones. Each temperature control zone has a length of 2 meters. The drying temperature increases from 80°C in the first zone to 150 °C in the 11th zone step by step and then decreases to 60 °C in the 15th zone step by step. There are 15 air outlets, and one air outlet is set for each temperature control zone. The wind speed of each air outlet is set as follows: the wind speed at the first air outlet is 5m/s; the wind speed at the second air outlet is 5m/s; the wind speed at the third air outlet is 10m/s; the wind speed at the fourth air outlet is 10m/s; the wind speed at the fifth air outlet is 10m/s; the wind speed at the sixth air outlet is 15m/s; the wind speed at the eighth air outlet is 15m/s; the wind speed at the ninth air outlet is 20m/s; the wind speed at the tenth air outlet is 20m/s; the wind speed at the eleventh air outlet is 25m/s; the wind speed at the twelfth air outlet is 20m/s; the wind speed at the thirteenth air outlet is 15m/s; the wind speed at the fourteenth air outlet is 10m/s; the wind speed at the fifteenth air outlet is 5m/s. The silicone oil body paper or film with acrylic-acid pressure sensitive adhesive coating goes through the baking area at the rate of 60 m/min.

Step of laminating the adhesive with the film substrate: the film substrate is processed by the electric corona before the lamination of the adhesive and thin film substrate so that the keying is greater than 44mN/m. Then, the layer of the acrylic-acid pressure-sensitive adhesive on the silicone oil body paper/film is anchored to the lower surface of the thin film substrate, which is then thermally cured at 55°C for 100 h.

### Embodiment 3

A food contact resealing label material comprising:
A thin film substrate, wherein the oxygen permeability is 1.12×10⁻⁵cm³/ m²·d · Pa and the moisture-penetrability is 1.45×10⁻⁴ kg (s· m²). The related thin film substrate is the polyester film coated by PVDC.

An acrylic-acid pressure-sensitive adhesive which is designed on the lower surface of the related thin film substrate is the food contact resealing solvent based acrylic two-liquid crosslinked pressure sensitive adhesive comprising an acrylic polymer as a first liquid and an isocyanate crosslinking agent as a second liquid, which is in parts by weight:
The amount of the acrylic acid is 5 parts by weight;
The amount of the ethyl acrylate is 10 parts by weight;
The amount of the methyl acrylate is 5 parts by weight;
The amount of the 2-ethylhexyl acrylate is 15 part by weight;
The amount of the toluene-2,4-diisocyanate is 1 part by weight;
The amount of azodiisobutyronitrile is 0.3 parts by weight;
The amount of the ethyl acetate is 60 parts by weight;
The amount of the diphenol propane epoxy resin solvent scavenger is 0.5 parts by weight;
The silicone oil body paper/film designed on the lower surface of the acrylic-acid pressure-sensitive adhesive;
The preparation method of the material for the food contact resealing label is shown as below:
   Steps to prepare the acrylic-acid pressure-sensitive adhesive: first, the acrylic acid, ethyl acrylate, methyl acrylate, 2-ethylhexyl acrylate, diphenol propane epoxy resin solvent scavenger and half of the solvents in the proportion are uniformly mixed and then added to the reactor. After that, the azodiisobutyronitrile as the initiator is dissolved in the remaining solvents and the dissolved initiator is then added to the reactor for reaction. The reaction temperature in the reactor ranges from 78 to 80°C and the reaction time is 8 hours. When the reaction is finished, the temperature drops to 45 °C, the reactor is kept at the temperature for 1 hour and the acrylic-acid pressure-sensitive adhesive as the first liquid is obtained. Later, the acrylic pressure sensitive adhesive as the first liquid and the toluene-2,4-diisocyanate (1 part by weight) as the second liquid are blended and stirred at high speed and the food contact resealing solvent based acrylic two-liquid crosslinked pressure sensitive adhesive is finally obtained.

Step of coating adhesives: coat the acrylic-acid and isocyanate cross-linking pressure-sensitive adhesive on the surface of the prepared silicone oil body paper/film.

Step of the infrared radiation drying: the silicone oil body paper/film with adhesive coating is transferred to the far infrared radiation area and the far infrared rays with 6-200µm effective wavelength are adopted to conduct the radiation penetration on the acrylic-acid pressure sensitive adhesive. The radiation time is 30 seconds. In the related drying tunnel, the baking area with different temperature is set up, which comprises 15 temperature control zones. Each temperature control zone has a length of 2 meters. The drying temperature increases from 80°C in the first zone to 150 °C in the 11th zone step by step and then decreases to 80 °C in the 15th zone step by step. There are 15 air outlets, and one air outlet is set for each temperature control zone. The wind speed of each air outlet is set as follows: the wind speed at the first air outlet is 5m/s; the wind speed at the second air outlet is 5m/s; the wind speed at the third air outlet is 10m/s; the wind speed at the fourth air outlet is 10m/s; the wind speed at the fifth air outlet is 10m/s; the wind speed at the sixth air outlet is 15m/s; the wind speed at the eighth air outlet is 15m/s; the wind speed at the ninth air outlet is 20m/s; the wind speed at the tenth air outlet is 20m/s; the wind speed at the eleventh air outlet is 25m/s; the wind speed at the twelfth air outlet is 20m/s; the wind speed at the thirteenth air outlet is 15m/s; the wind speed at the fourteenth air outlet is 10m/s; the wind speed at the fifteenth air outlet is 5m/s. The silicone oil body paper or film with acrylic-acid pressure sensitive adhesive coating goes through the baking area at the rate of 50 m/min.

Step of laminating the adhesive with the film substrate: the film substrate is processed by the electric corona so that the keying of the lower surface of the thin film substrate is greater than 44mN/m. Then, the layer of the acrylic-acid pressure-sensitive adhesive on the silicone oil body paper or film is anchored to the lower surface of the thin film substrate, which is then thermally cured at 50°C for 120 h.

### Embodiment 4

A food contact resealing label material comprising:
A thin film substrate, wherein the oxygen permeability is 1.18×10⁻⁵ cm³/ m²·d · Pa and the moisture-penetrability is 1.51×10⁻⁴ kg (s· m²). The related thin film substrate is the polyethylene glycol terephthalate film coated by PVDC.

An acrylic-acid pressure-sensitive adhesive which is designed on the lower surface of the related thin film substrate is the food contact resealing solvent based acrylic two-liquid crosslinked pressure sensitive adhesive comprising an acrylic polymer as a first liquid and an isocyanate crosslisnking agent as a second liquid, which is in parts by weight:
The amount of the acrylic acid is 8 parts by weight;
The amount of the methyl acrylate is 12 parts by weight;
The amount of the ethyl acrylate is 20 parts by weight;
The amount of the toluene -2,6- diisocyanate is 0.5 part by weight;
The amount of the azodiisoheptonitrile is 0.2 parts by weight;
The amount of butanone is 70 parts by weight;
The amount of the tetraphenol ethane epoxy resin solvent scavenger is 0.6 parts by weight;
A silicone oil body paper/film which is designed on the lower surface of the acrylic-acid pressure-sensitive adhesive;
The preparation method of the material for the food contact resealing label is is as follows:
   Steps to prepare the acrylic-acid pressure-sensitive adhesive: first, the acrylic acid, methyl acrylate, ethyl acrylate, tetraphenol ethane epoxy resin solvent scavenger and half of the solvents in the proportion are uniformly mixed and then added to the reactor. After that, the azobisvaleronitrile is dissolved in the remaining solvents and then added to the reactor for reaction. The reaction temperature in the reactor ranges from 79 to 81°C and the reaction time is 10 hours. When the reaction is finished, the temperature drops to 40 °C, the reactor is kept at the temperature for 2 hours and the acrylic-acid pressure-sensitive adhesive as the first liquid is obtained. Later, the acrylic pressure sensitive adhesive as the first liquid and the isocyanate cross-linking agent (0.5 parts by weight) as the second liquid are blended and stirred at high speed and the food contact resealing solvent based acrylic two-liquid crosslinked pressure sensitive adhesive is finally obtained.

Step of coating adhesives: coat the acrylic-acid and isocyanate cross-linking pressure-sensitive adhesive on the surface of the prepared silicone oil body paper/film.

Step of the infrared radiation drying: the silicone oil body paper/film with adhesive coating is transferred to the far infrared radiation area and the far infrared rays with 20µm effective wavelength are adopted to conduct the radiation penetration on the acrylic-acid pressure sensitive adhesive. In the related drying tunnel, the baking area with different temperature is set up, which comprises 15 temperature control zones. Each temperature control zone has a length of 2 meters. The drying temperature increases from 90°C in the first zone to 150 °C in the 11th zone step by step and then decreases to 80 °C in the 15th zone step by step. There are 15 air outlets, and one air outlet is set for each temperature control zone. The wind speed of each air outlet is set as follows: the wind speed at the first air outlet is 5m/s; the wind speed at the second air outlet is 5m/s; the wind speed at the third air outlet is 10m/s; the wind speed at the fourth air outlet is 10m/s; the wind speed at the fifth air outlet is 10m/s; the wind speed at the sixth air outlet is 15m/s; the wind speed at the eighth air outlet is 15m/s; the wind speed at the ninth air outlet is 20m/s; the wind speed at the tenth air outlet is 20m/s; the wind speed at the eleventh air outlet is 25m/s; the wind speed at the twelfth air outlet is 20m/s; the wind speed at the thirteenth air outlet is 15m/s; the wind speed at the fourteenth air outlet is 10m/s; the wind speed at the fifteenth air outlet is 5m/s. The silicone oil body paper or film with acrylic-acid pressure sensitive adhesive coating goes through the baking area at the rate of 60 m/min.

Step of laminating the adhesive with the film substrate: the film substrate is processed by the electric corona so that the keying of the lower surface of the thin film substrate is greater than 44mN/m. Then, the layer of the acrylic-acid pressure-sensitive adhesive on the silicone oil body paper or film is anchored to the lower surface of the thin film substrate, which is then thermally cured at 60°C for 96 h.

### Embodiment 5

A food contact resealing label wherein the label is formed by the food contact resealing label material of this invention with die cuts and/or with printing product information patterns.

### Embodiment 6

A food packaging container and the label pasted to the container body, wherein the label is the food contact resealing label described in Embodiment 5.

### Performance test and effect evaluation

1. The performance test and effect evaluation on the acrylic pressure-sensitive adhesive in the related food contact resealing label material are conducted. The oxygen permeability is tested according to the differential-pressure method in GB/T 1038-2000, the moisture permeability is tested according to the GB/T 17146-1997. The adhesive force is tested according to the test method of the peel strength in GB/2792-2014. The keying is tested according to the assay method of EVA sheet wetting tension in GB/14216-2008. The test results are shown as Table 1.

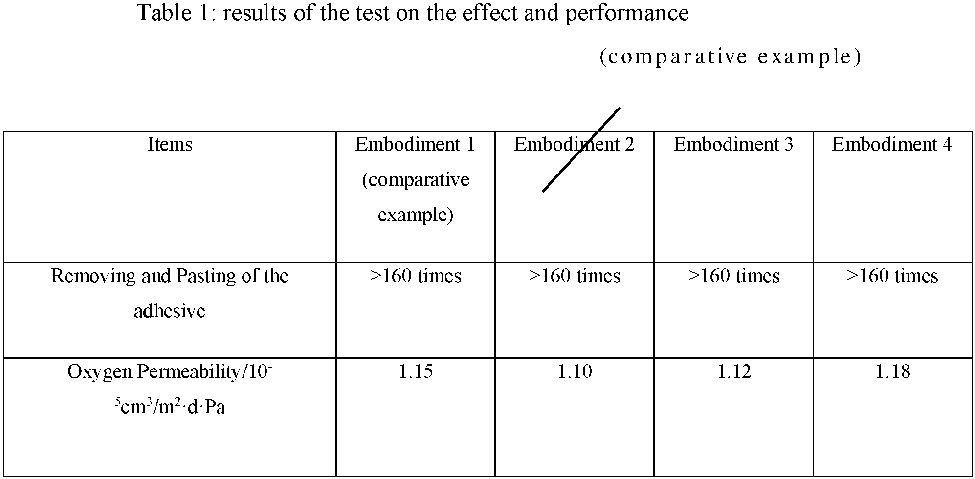

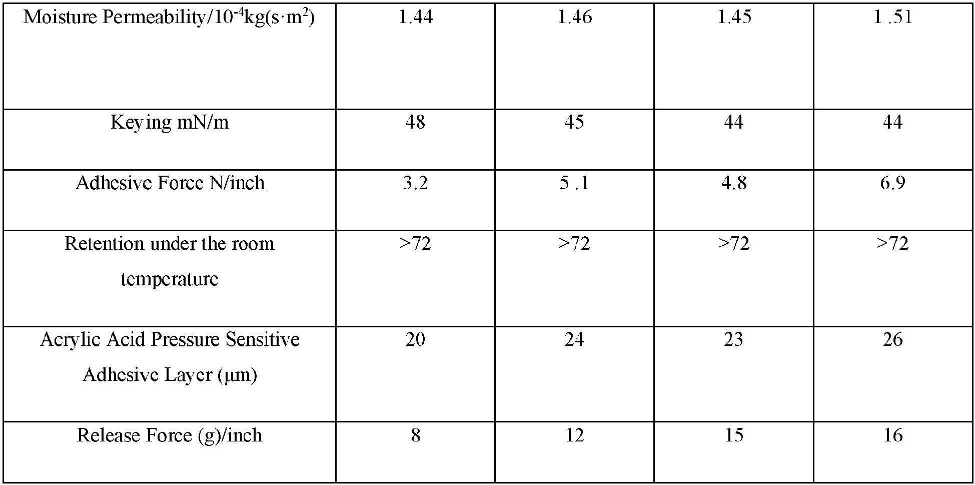

### 2. Toxicity test of the acrylic-acid pressure-sensitive adhesive.

The acrylic-acid pressure-sensitive adhesive of the food contact resealing label material described in embodiment 1 to 4 is processed according to the method of GB15193.3-2003. According to the test method of GB15193.3-2003, experimental animals are KM mice at SPF grade, weighing 18g to 22g and the administration method is oral administration by a limited dose method at a dose of LD>5.0g/Kg. The test results are shown in Table 2.

**Table 2: results of the toxicity test**

| Dose ( g/kg) | Sex& Quantity | Weight(g) | | | Number of Dead Animals | Death Rate ( %) |
|---|---|---|---|---|---|---|
| | | 0 day | 7 day | 14 day | | |
| 5.0 | Female 10 | 19.6±0.70 | 27.8±2.25 | 31.0±2.94 | 0 | 0 |
| 5.0 | Male 10 | 19.8±0.92 | 29.7±2.41 | 34.8±3.82 | 0 | 0 |

No poisoning symptoms or death are found among the experimental mice during the observation period after being exposed to the dose. No abnormal ponderal growth has been found among the male and female mice. After the observation of the experiment, no abnormal changes have been found in the anatomy of the test animals. Results in Table 2 are classified according to the acute toxicity. Therefore, the acrylic pressure-sensitive adhesive layer of the food contact resealable label material of the present invention is practically non-toxic.

### 3. Detection of the migration of acrylic monomers in the acrylic-acid pressure-sensitive adhesive layer in the the food contact resealing label material.

### Test Method:

1) According to the practical use of the food contact resealing label, the food contact resealing label is cut into pieces and put into a clean glassware. The proportion is 6 dm² food contact surface and 1L food simulants. The mouth of the glassware is sealed by the watch glass or aluminized paper. Migration test is conducted according to the migration temperature and time specified in EU (EU) NO 10/2011 regulations. After that, it is cooled to room temperature, and the food simulants are transferred to another clean glassware for subsequent processing. Food simulant A is 3% aqueous acetic acid solution (W/V), which is used to simulate acidic foods with a pH value of <4.5. Food simulant B is 10% ethanol water (V/V), which is used to simulate acidic aqueous foods with a pH value of pH >4.5. Food simulant C is 20% ethanol water (V/V), which is used to simulate foods containing alcohol and alcohol content not exceeding 20%. Food simulant D1 is 50% ethanol water (V/V), which is used to simulate foods and oil-water emulsions containing alcohol and alcohol content greater than 20%. Food simulant D2 is olive oil , which is used to simulate foods with free fat on the surface.
2) Take10 mL food simulant A, B, and C respectively after the migration test, place them in a 50mL stoppered centrifuge tube and then add 4mL methyl acetate and 1g sodium chloride. After the mixture was stoppered, place it in a separating shaker for 10 min. At last, take the supernatant for testing.
3) Take10 mL food simulant D1 after the migration test, place it in a 50mL stoppered centrifuge tube and then add 4mL methyl acetate and 1g sodium chloride. Then, add 2mL saturated sodium sulfate solution. After the mixture was stoppered, place it in a separating shaker for 10 min. After the centrifugal separation, take the supernatant and filter it by 0.45µm filter membrane for testing.
4) Take10 mL food simulant D2 after the migration test, place it in a 50mL stoppered centrifuge tube and then add 4mL mixed liquor of methyl alcohol and acetonitrile (the ratio is 1:1) and 1g sodium chloride. After the mixture was stoppered, place it in a separating shaker for 10 min. After the centrifugal separation, take the supernatant and filter it by 0.45µm filter membrane for testing.
5) The food simulant A, B, C, D1 and D2 that have not been treated by the migration test respectively were processed according to the methods according to step 2 to 4;
6) Detection

Acrylic acid (embodiment 1) detection conditions for migration volume (embodiment 1): GC/MS was used for the determination. The detecting condition is as following: column: DB-5ms column, height × inner diameter × film thickness=30m×0. 25mm×0.25µm, or equivalent; Column temperature: 40°C for 6 minutes, and then increases to 200°C at the speed of 20°C/min for 5 min; Injection temperature: 180°C. Carrier gas flow-rate: 0.8 mL/min. Splitting mode: split at a split ratio of 10:1; Injection volum: 1µL; Chromatography/mass interface temperature: 280°C; Ionization temperature: 250 °C; Quadrupole temperature: 150 °C. Ionization mode: EI. Electric energy power: 70eV. Scanning mode: select ion monitoring mode (SIM). Solvent Delay: 2.5 minutes.

Acrylic ester (embodiment 1) detection conditions for migration volume (embodiment 2-4): column: DB-FFAP column, height × inner diameter × film thickness = 30m × 0. 32mm × 0. 50µm, or equivalent; Column temperature: 40°C for 2 minutes, and then increases to 320°C at the speed of 20°C/min for 4min; Injection temperature: 220°C. Carrier gas flow-rate: 1.8 mL/min. Splitting mode: splitless; Injection volum: 1µL; Chromatography/mass interface temperature: 280 °C; Ionization temperature: 250 °C; Quadrupole temperature: 150 °C. Ionization mode: EI. Electric energy power: 70eV. Scanning mode: select ion monitoring mode (SIM). Solvent Delay: 5 minutes.

### 7) Detection results

The standard curve of acrylic monomers is shown in Figure 1. The results of Fig. 1 show that the acrylate monomers present a good linear relation in the range of 0.6 to 10.0 mg/L and the correlation coefficient r> 0.9975. The detection limit of this method ranges from 0.006 to 0.12 mg/kg. The results show that the total migration volume of acrylic acid is form 1mg/kg to RL value.

### 4. Detection of the residual acrylic monomers in the acrylic acid pressure-sensitive adhesive layer of the food contact resealing label material.

The food contact resealing label material described in embodiment 1-4 were sent to Shanghai Ingeer Certification Assessment Co., Ltd (ICAS) on May 27, 2017 for the detection of acrylic monomer migration. The test results are shown in Table 3.

**Table 3: Results of detection on the migration volume of acrylic monomers**

| Items | Test Method | Test Instruments | Test Results | Detection Limits (RL Value) |
|---|---|---|---|---|
| Acrylic Acid | GB9685-2016 | Gas Chromatograph | ND | 0.012mg/L |
| Methyl Acrylate | GB9685-2016 | Gas Chromatograph | ND | 0.012mg/L |
| Butyl Acrylate | GB9685-2016 | Gas Chromatograph | ND | 0.012mg/L |
| Ethylhexyl Acrylate | GB9685-2016 | Gas Chromatograph | ND | 0.012mg/L |

Remarks: ND indicates not detected, and RL value is the upper limit detected by the method.

### 5.Detection of the residue of the solvent in the acrylic acid pressure-sensitive adhesive layer of the food contact resealing label material.

According to the methods in GB/T10004-2008 and HS-GC-MS, the food contact resealing label material used in embodiment 1-4 were sent to SGS testing institution on May 24, 2017 to detect the solvent residue of the adhesive layer. The test results are shown in Table 4.

**Table 4: Detection results of the residual of solvent**

| Items | Test Methods | Test Results | Detection Limits (RL Value) |
|---|---|---|---|
| Acetone (mg/m²) | GBAT10004-2008 &HS-GC-MS | ND | 0.05 |
| Isopropanol(mg/m²) | GBAT10004-2008 &HS-GC-MS | ND | 0.05 |
| Ethyl Acetate(mg/m²) | GBAT10004-2008 &HS-GC-MS | ND | 0.05 |
| 0.01 Butanone(mg/m²) | GBAT10004-2008 &HS-GC-MS | ND | 0.05 |

Remarks: ND indicates not detected, and RL value is the upper limit detected by the method.

### 6. Detection of the residue of the isocyanate cross-linking agent in the acrylic acid pressure-sensitive adhesive layer of the food contact resealing label material.

According to the methods in GB/T31604.45-2016, the food contact resealing label material used in embodiment 1-4 were sent to SGS testing institution on April 25, 2017 to detect the residue of isocyanate cross-linking agent in the adhesive. The test results are shown in Table 5.

**Table 5**

| Test Items | Unit | Test Value | RL Value |
|---|---|---|---|
| Cyclohexyl Isocyanate | mg/kg | ND | 0.1 |
| Diphenylmethane-4,4'-diisocyanate | mg/kg | ND | 0.1 |
| Toluene-2 ,4-diisocyanate | mg/kg | ND | 0.1 |
| Toluene-2 ,6-diisocyanate | mg/kg | ND | 0.1 |

Remarks: ND indicates not detected, and RL value is the upper limit detected by the method.

## Claims

1. A food contact resealing label material, **characterized in that** the material comprises: a thin film substrate selected from a base film formed by vapor-depositing aluminum or coated with PVDC on a film consisting of polyester, wherein the oxygen permeability of the thin film substrate, tested according to the differential-pressure method in GB/T 1038-2000, is lower than 2.0×10⁻⁵m³/m²·d·Pa, and the moisture-penetrability of the thin film substrate, tested according to GB/T 17146-1997. is lower than 2.×10⁻⁴kg(s·m²);
and a solvent based acrylic-acid pressure-sensitive adhesive which is designed on the lower surface of the film substrate, wherein the residual of solvent ranges from 5mg/m² to RL value and the overall migration volume of the acrylic acid ranges from 6mg/kg to RL value;
and a silicone oil body paper/film which is designed on the lower surface of the acrylic-acid pressure-sensitive adhesive, wherein
the solvent based acrylic-acid pressure-sensitive adhesive is a two-liquid cross-linking pressure sensitive adhesive comprising an acrylic polymer as a first liquid and an isocyanate crosslinking agent as a second liquid,
the acrylic monomer is the polymer formed by three or more than three materials of acrylic acid, methyl acrylate, butyl acrylate, 2-ethylhexyl acrylate, acrylic acid n-propyl ester and ethyl acrylate,
wherein the amount of the acrylic monomer is from 20 to 60 parts by weight;
the amount of the isocyanate cross-linking agent is from 1 to 0.5 parts by weight;
the amount of the initiator is from 0.2 to 0.5 parts by weight;
the amount of the solvents is at least 40 parts by weight; and
the initiator is one or two mixture of azobisisobutyronitrile, azobisisoheptanenitrile,
**and characterized in that**
it further comprises a solvent scavenger,
wherein the solvent scavenger is one or a mixture of more than two of epoxypropane, epoxybutane, diphenol, tetra-phenol epoxy resin and diethylene vinyl cyclohexene epoxy resin.

2. The food contact resealing label according to claim 1, **characterized in that** the related label can be in direct contact with food.

3. The food contact resealing label material according to claim 1, **characterized in that** the isocyanate cross-linking agent is one or a mixture of more than two of toluene -2, 6-diisocyanate, diphenyl methylalkane-4, 4-diisocyanate, toluene -2, 4- diiso-cyanate, naphthalene - 1, 5- diisocyanate, phenyl isocyanate, cyclohexyl isocya-nate and hexamethylene isocyanate.

4. The food contact resealing label material according to claim 1, **characterized in that** the solvent is acetone, isopropanol, ethyl acetate or butanone.

5. A preparation method of a food contact resealing label according to claim 1, **characterized in that** the method comprises:
Step of preparing a solvent based acrylic-acid pressure-sensitive adhesive which is a two-liquid cross-linking pressure sensitive adhesive comprising an acrylic polymer as a first liquid and an isocyanate crosslinking agent as a second liquid;
Step of coating adhesives: coat the acrylic-acid and isocyanate cross-linking pressure-sensitive adhesive on the surface of a prepared silicone oil body paper/film;
Step of infrared radiation penetration: first, transfer the silicone oil body paper/film coated with adhesive to an infrared radiation area and then far infrared radiation of a wavelength range of 6-200 µm for 15-30 seconds is adopted to conduct the radiation full penetration of on the acrylic-acid and isocyanate cross-linking pressure-sensitive adhesive layer from the inside to outside, which is then transferred to a drying tunnel, wherein the drying tunnel is provided with a temperature increasing step-by step area and hot air drying is conducted in a baking zone;
Step of laminating the adhesive with a film substrate: after the far infrared radiation, the dried and solidified acrylic-acid and isocyanate cross-linking pressure-sensitive adhesive is then transferred to a thin film substrate wherein the oxygen permeability is tested according to the differential-pressure method in GB/T 1038-2000, the moisture permeability is tested according to the GB/T 17146-1997, and the oxygen permeability of the thin film substrate is lower than 2.0×10-5m3/m2·d·Pa and the moisture-penetrability of the thin film substrate is lower than 2.0×10-4kg(s·m2) wherein the thin film substrate is a base film formed by vapor-depositing aluminum or coated with PVDC on a film consisting of polyester,
**characterized in that**
the baking area comprises 15 temperature control zones and each temperature control zone has a length of 2 meters, the drying temperature increases from 80°C in the first zone to 160 °C in the 11th zone step by step and then decreases to 60 °C in the 15th zone step by step, the silicone oil body paper/film coated with acrylic two-liquid crosslinking pressure sensitive adhesive goes through the baking area at 30-80 m/min, several air outlets are set up in the fifteen related temperature control zones in which the air speed increases from 5m/s to 30m/s step by step

6. A preparation method of the food contact resealing label according to claim 5, **characterized in that** the method further comprising after the step of infrared radiation penetration and before the step of laminating:
Step of surface material treatment: the thin film substrate is processed by the electric corona so that the viscous force keying, **characterized by** the surface tension (mN/m) of the substrate, is greater than 44mN/m and wherein the keying is tested according to the assay method of EVA sheet wetting tension in GB /14216-2008..

7. A preparation method of the food contact resealing label according to claim 5 or 6, **characterized in that** in the step of preparing the acrylic pressure sensitive adhesive, the reaction temperature in the reactor ranges from 75 to 82°C and the reaction time is 6 to 10 hours, after reaction, the temperature drops to 40 to 45 °C and the reactor is kept at the temperature for 1 to 2 hours.

## Patentansprüche

1. Wiederversiegelndes Etikettenmaterial für Lebensmittelkontakt, **dadurch gekennzeichnet, dass** das Material Folgendes umfasst: ein Dünnschichtsubstrat, das aus einem Basisfilm ausgewählt ist, der durch Aluminiumdampfabscheidung gebildet ist oder mit PVDC auf einem Film beschichtet ist, der aus Polyester besteht, wobei die Sauerstoffdurchlässigkeit des Dünnschichtsubstrats, getestet gemäß dem Differenzdruckverfahren in GB/T 1038-2000, kleiner als 2,0 × 10⁻⁵ m³/m²·d·Pa ist, und die Feuchtigkeitsdurchlässigkeit des Dünnschichtsubstrats, getestet gemäß GB/T 17146-1997, kleiner als 2,0 × 10⁻⁴ kg(sm²) ist;
und einen lösungsmittelbasierten druckempfindlichen Acrylsäure-Klebstoff, der auf der unteren Oberfläche des Filmsubstrats ausgelegt ist, wobei der Rest des Lösungsmittels von 5 mg/m² bis zu dem RL-Wert reicht, und das Gesamtmigrationsvolumen der Acrylsäure von 6 mg/kg bis zu dem RL-Wert reicht; und einen Silikonölkörperpapier/-film, der auf der unteren Oberfläche des druckempfindlichen Acrylsäure-Klebstoffs ausgelegt ist, wobei
der lösungsmittelbasierte druckempfindliche Acrylsäure-Klebstoff ein druckempfindlicher Zwei-Flüssigkeits-Vernetzungsklebstoff ist, der ein Acrylpolymer als eine erste Flüssigkeit und ein Isocyanat-Vernetzungsmittel als eine zweite Flüssigkeit umfasst,
das Acrylmonomer das Polymer ist, das aus drei oder mehr als drei Materialien aus Acrylsäure, Methylacrylat, Butylacrylat, 2-Ethylhexylacrylat, Acrylsäure-n-propylester und Ethylacrylat gebildet ist,
wobei die Menge des Acrylmonomers 20 bis 60 Gewichtsteile beträgt; die Menge des Isocyanat-Vernetzungsmittels 1 bis 0,5 Gewichtsteile beträgt; die Menge des Initiators 0,2 bis 0,5 Gewichtsteile beträgt;
die Menge der Lösungsmittel beträgt mindestens 40 Gewichtsteile beträgt; und
der Initiator eine oder zwei Mischungen aus Azobisisobutyronitril, Azobisisoheptanenitriten ist, und **dadurch gekennzeichnet, dass**
es ferner einen Lösungsmittel-Scavenger umfasst,
wobei der Lösungsmittel-Scavenger eines oder eine Mischung aus mehr als zwei von Epoxypropan, Epoxybutan, Diphenol, Tetraphenol-Epoxidharz und Diethylenvinylcyclohexen-Epoxidharz ist.

2. Wiederversiegelndes Etikett für Lebensmittelkontakt nach Anspruch 1, **dadurch gekennzeichnet, dass** das entsprechende Etikett in direktem Kontakt mit Lebensmitteln stehen kam.

3. Wiederversiegelndes Etikettenmaterial für Lebensmittelkontakt nach Anspruch 1, **dadurch gekennzeichnet, dass** das Isocyanat-Vernetzungsmittel eines oder eine Mischung aus mehr als zwei Toluol-2, 6-Diisocyanat, Diphenylmethylalkan-4,4-Diisocyanat, Toluol-2,4-Diisocyanat, Naphthalin-1,5-Diisocyanat, Phenylisocyanat, Cyclohexylisocyanat und Hexamethylenisocyanat ist.

4. Wiederversiegelndes Etikettenmaterial für Lebensmittelkontakt nach Anspruch 1, **dadurch gekennzeichnet, dass** das Lösungsmittel Aceton, Isopropanol, Ethylacetat oder Butanon ist.

5. Herstellungsverfahren für ein wiederversiegelndes Etikett für Lebensmittelkontakt nach Anspruch 1, **dadurch gekennzeichnet, dass** das Verfahren Folgendes umfasst:
einen Herstellungsschritt eines lösungsmittelbasierten druckempfindlichen Acrylsäure-Klebstoffs, der ein Zwei-Flüssigkeits-Vernetzungsklebstoff ist, der ein Acrylpolymer als eine erste Flüssigkeit und ein Isocyanat-Vernetzungsmittel als eine zweite Flüssigkeit umfasst;
einen Beschichtungsschritt von Klebstoffen: Beschichten des druckempfindlichen Acrylsäure- und Isocyanat-Vernetzungsklebstoffs auf der Oberfläche eines vorbereiteten Silikonölkörperpapier/-films;
einen Schritt der Infrarotstrahlungs-Durchdringung: zunächst Transferieren des Silikonölkörperpapier/-films, der mit Klebstoff beschichtet ist, zu einem Infrarotstrahlungsbereich, und dann Anwenden von Strahlung im fernen Infrarot mit einem Wellenlängenbereich von 6-200 µm für 15-30 Sekunden, um die vollständige Strahlungsdurchdringung auf der druckempfindlichen Acrylsäure- und Isocyanat-Vernetzungsklebstoffschicht von innen nach außen durchzuführen, die dann in einen Trocknungstunnel transferiert wird, wobei der Trocknungstunnel mit einem Bereich mit schrittweiser Temperaturerhöhung versehen ist und Heißlufttrocknung in einer Backzone durchgeführt wird;
einen Laminierungsschritt des Klebstoffs mit einem Filmsubstrat: nach der Bestrahlung im fernen Infrarot, wird der getrocknete und verfestigte druckempfindliche Acrylsäure- und Isocyanat Vernetzungsklebstoff auf ein Dünnschichtsubstrat transferiert, wobei die Sauerstoffdurchlässigkeit gemäß dem Differenzdruckverfahren in GB/T 1038-2000 getestet wird, die Feuchtigkeitsdurchlässigkeit gemäß GB/T 17146-1997 getestet wird, und die Sauerstoffdurchlässigkeit des Dünnschichtsubstrats niedriger als 2,0×10⁻⁵m³/m² ·d·Pa ist, und die Feuchtigkeitsdurchlässigkeit des Dünnschichtsubstrats niedriger als 2,0 × 10⁻⁴ kg(s·m²) ist, wobei das Dünnschichtsubstrat ein Basisfilm ist, der durch Aluminiumdampfabscheidung gebildet oder mit PVDC auf einem Film, der aus Polyester besteht, beschichtet wird,
**dadurch gekennzeichnet, dass**
der Backbereich 15 Temperaturregelzonen umfasst, und jede Temperaturregelzone eine Länge von 2 Metern aufweist, die Trocknungstemperatur von 80 °C in der ersten Zone auf 160 °C in der 11. Zone Schritt für Schritt ansteigt und dann in der 15. Zone Schritt für Schritt auf 60 °C sinkt, der Silikonölkörperpapier/-film, der mit druckempfindlichem Acryl-Zwei-Flüssigkeits-Vernetzungsmittel beschichtet ist, bei 30-80 m/min durch den Backbereich durchgeht, mehrere Luftauslässe in den fünfzehn verwandten Temperaturregelzonen eingerichtet sind, in denen die Luftgeschwindigkeit Schritt für Schritt von 5 m/s auf 30 m/s ansteigt.

6. Herstellungsverfahren für das wiederversiegelnde Etikett für Lebensmittelkontakt nach Anspruch 5, **dadurch gekennzeichnet, dass** das Verfahren nach dem Schritt des Infrarotstrahlung-Durchdringens und vor dem Laminierungsschritt weiter Folgendes umfasst:
einen Oberflächenbehandlungsschritt: das Dünnschichtsubstrat wird durch die elektrische Korona verarbeitet, so dass das viskose Kraft-Keying, **gekennzeichnet durch** die Oberflächenspannung (mN/m) des Substrats, größer als 44 mN/m ist, und wobei das Keying gemäß dem Testverfahren von EVA-Blattbenetzungsspannung in GB/14216-2008 getestet wird.

7. Herstellungsverfahren für das wiederversiegelnde Etikett für Lebensmittelkontakt nach Anspruch 5 oder 6, **dadurch gekennzeichnet, dass** in dem Herstellungsschritt des druckempfindlichen Acrylklebstoffs die Reaktionstemperatur in dem Reaktor von 75 bis 82 °C reicht, und die Reaktionszeit 6 bis 10 Stunden nach der Reaktion beträgt, die Temperatur auf 40 bis 45 °C fällt, und der Reaktor 1 bis 2 Stunden auf der Temperatur gehalten wird.

## Revendications

1. Matériau d'étiquette de refermeture de contact alimentaire, **caractérisé en ce que** le matériau comprend : un substrat de film fin sélectionné à partir d'un film de base formé par dépôt en phase vapeur d'aluminium ou revêtu de PVDC sur un film constitué de polyester, dans lequel la perméabilité à l'oxygène du substrat de film fin, testée selon la méthode de pression différentielle dans GB/T 1038-2000, est inférieure à 2,0×10⁻⁵m³/m²·d·Pa, et la pénétrabilité de l'humidité du substrat de film fin, testée selon GB/T 17146-1997, est inférieure à 2,0×10⁻⁴kg(sm²) ;
et un adhésif sensible à la pression d'acide acrylique à base de solvant qui est conçu sur la surface inférieure du substrat de film, dans lequel le résidu de solvant est compris entre 5mg/m² et la valeur RL et le volume global de migration de l'acide acrylique est compris entre 6mg/kg et la valeur RL ; et un film/papier à corps d'huile de silicone qui est conçu sur la surface inférieure de l'adhésif sensible à la pression d'acide acrylique à base de solvant, dans lequel
l'adhésif sensible à la pression d'acide acrylique à base de solvant est un adhésif sensible à la pression de réticulation à deux liquides comprenant un polymère acrylique comme un premier liquide et un agent de réticulation de type isocyanate comme un second liquide,
le monomère acrylique est le polymère formé par trois ou plus que trois matériaux d'acide acrylique, d'acrylate de méthyle, d'acrylate de butyle, d'acrylate de 2-éthylhexyle, d'ester n-propylique d'acide acrylique et d'acrylate d'éthyle,
dans lequel la quantité de monomère acrylique est comprise entre 20 et 60 parties en poids ; la quantité de l'agent de réticulation de type isocyanate est comprise entre 1 et 0,5 partie en poids ; la quantité de l'inducteur est comprise entre 0,2 et 0,5 partie en poids ;
la quantité des solvants et d'au moins 40 parties en poids ; et
l'inducteur est une ou deux mixtures d'azobisisobutyronitrile, d'azobisisoheptanenitrile, et **caractérisé en ce que**
il comprend en outre un capteur de solvants,
dans lequel le capteur de solvants est un ou un mélange de plus que deux d'époxypropane, d'époxybutane, de diphénol, de résine époxy tétra-phénol et de résine époxy diéthylène vinyl cyclohexène.

2. Étiquette de refermeture de contact alimentaire selon la revendication 1, **caractérisée en ce que** l'étiquette associée peut être en contact direct avec les aliments.

3. Matériau d'étiquette de refermeture de contact alimentaire selon la revendication 1, **caractérisé en ce que** l'agent de réticulation de type isocyanate est un ou un mélange de plus que deux de diisocyanate de toluène -2, 6-diisocyanate de diphénylméthylalcane-4, 4-diisocyanate de toluène -2, 4- diiso-cyanate, diisocyanate de naphtalène -1, 5-isocyanate de phényle, isocyanate de cyclohexyle et isocyanate d'hexaméthylène.

4. Matériau d'étiquette de refermeture de contact alimentaire selon la revendication 1, **caractérisé en ce que** le solvant est de l'acétone, isopropanol, acétate d'éthyle ou butanone.

5. Procédé de préparation d'une étiquette de refermeture de contact alimentaire selon la revendication 1, **caractérisé en ce que** le procédé comprend :
l'adhésif d'acide acrylique à base de solvant sensible à la pression est un adhésif sensible à la pression de réticulation à deux liquides comprenant un polymère acrylique comme un premier liquide et un agent de réticulation de type isocyanate comme un second liquide;
étape de revêtement d'adhésif : revêtement de l'adhésif sensible à la pression d'acide acrylique et de réticulation de type isocyanate sur la surface d'un film/papier à corps d'huile de silicone préparé ;
étape de pénétration de rayonnement infrarouge : d'abord, transfert du film/papier à corps d'huile de silicone avec adhésives à une zone de rayonnement infrarouge et ensuite rayonnement infrarouge lointain d'une plage de longueur d'onde de 6 à 200 pm pour 15 à 30 secondes est adopté pour effectuer la pénétration complète du rayonnement sur la couche adhésive sensible à la pression d'acide acrylique et de réticulation de type isocyanate de l'intérieur vers l'extérieur, laquelle est ensuite transférée à un tunnel de séchage, dans laquelle le tunnel de séchage est pourvu de d'une zone d'augmentation pas à pas de la température et un séchage à l'air chaud est effectué dans une zone de cuisson ;
étape de lamination de l'adhésif avec un substrat de film : après le rayonnement infrarouge lointain, l'adhésif sensible à la pression d'acide acrylique et de réticulation de type isocyanate séché et solidifié est ensuite transféré à un substrat de film fin, dans laquelle la perméabilité à l'oxygène est testée selon la méthode de pression différentielle dans la norme GB/T 1038-2000, et la perméabilité à l'humidité est testée selon la norme GB/T 17146-1997, et la perméabilité à l'oxygène du substrat de film fin est inférieure à 2,0×10-5m³/m²·d·Pa et la pénétrabilité de l'humidité du substrat de film fin est inférieure à 2,0×10-4kg(sm²), dans laquelle le substrat de film fin est un film de base formé par dépôt en phase vapeur d'aluminium ou revêtu de PVDC sur un film constitué de polyester,
**caractérisé en ce que**
la zone de cuisson comprend 15 zones de contrôle de température et chaque zone de contrôle de température a une longueur de 2 mètres, la température de séchage augmente pas à pas de 80 °C dans la première zone à 160 °C dans la 11 zone et ensuite diminue pas à pas à 60 °C dans la 15 zone, le film/papier à corps d'huile de silicone revêtu de l'adhésif sensible à la pression acrylique de réticulation à deux liquides passe à travers la zone de cuisson à 30 à 80 m/min, plusieurs sorties d'air sont installées dans les quinze zones associées dans lesquelles la vitesse de l'air augmente pas à pas de 5 m/s à 30 m/s.

6. Procédé de préparation de l'étiquette de refermeture de contact alimentaire selon la revendication 5, **caractérisé en ce que** le procédé comprenant, en outre, après l'étape de pénétration de rayonnement infrarouge et avant l'étape de lamination :
étape de traitement de matériau de surface : le substrat de film fin est traité par la couronne électrique de sorte que la force visqueuse de clivage, **caractérisée par** la tension superficielle (mN/m) du substrat, est supérieure à 44 mN/m et dans laquelle le clivage est testé selon la méthode d'essai de la tension de mouillage des feuilles d'EVA dans la norme GB /14216-2008.

7. Procédé de préparation de l'étiquette de refermeture de contact alimentaire selon la revendication 5 ou 6, **caractérisé en ce que** l'étape de préparation de l'adhésif sensible à la pression acrylique, la température de réaction dans le réacteur est comprise de 75 à 82 °C et la durée de réaction est comprise entre 6 et 10 heures, après la réaction, la température tombe de 40 à 45 °C et le réacteur est maintenu à la température pendant 1 à 2 heures.
